# EUROPEAN PATENT SPECIFICATION

(11) **EP 0 680 938 B1**
(45) Date of publication and mention of the grant of the patent: **22.09.1999**
(21) Application number: 95302742.2
(22) Date of filing: 24.04.1995
(51) Int. Cl.: C04B 35/195, C04B 35/632, C04B 35/634

(54) **Method of producing cordierite ceramic honeycomb structural bodies**
Verfahren zur Herstellung von keramischen Formkörpern mit Honigwabenstruktur aus Cordierit
Méthode de production de corps céramiques à structure en nid d'abeilles

(30) Priority: 25.04.1994 JP 8627694
(43) Date of publication of application: 08.11.1995
(73) Proprietor: NGK INSULATORS, LTD., Nagoya City Aichi Pref. (JP)
(72) Inventor: Kasai, Yoshiyuki, Nagoya-city, Aichi Pref. (JP); Kotani, Wataru, Kasugai City, Aichi Pref. (JP); Ono, Yoshiro, Nagoya City, Aichi Pref. (JP)
(74) Representative: Paget, Hugh Charles Edward

(56) References cited:
- EP-A- 0 353 523
- EP-A- 0 360 563
- DATABASE WPI Week 8348, Derwent Publications Ltd., London, GB; AN 83-830506 & JP-A-58 181 763 (NIPPON OILS % FATS KK) 24 October 1983

## Description

### Background of the Invention

### (1) Field of the Invention

The present invention relates to a method of producing cordierite ceramic honeycomb structural bodies by an extrusion method.

### (2) Related Art Statement

Cordierite ceramic honeycomb structural bodies have been used for a catalyst carrier for purifying an exhaust gas, a filter, a heat exchanger and so on in a field of automobiles or industries. Recently, in the cordierite ceramic honeycomb bodies mentioned above, a thickness of a partition wall is required to be thinner so as to improve a purifying performance, a pressure loss and a heat exchanging efficiency.

The cordierite ceramic honeycomb bodies are generally produced by the extrusion method so as to perform a mass production. In this case, in order to improve an extrusion performance, forming agents such as binders, surface active agents and so on are added in a batch of ceramic raw materials for the extrusion.

However, even if use is made of the batch of ceramic raw materials mentioned above, it is not possible to obtain the cordierite ceramic honeycomb structural bodies having a thinner partition wall. That is to say, if the batch is extruded to obtain honeycomb structural forming bodies, a wave portion is generated on the partition wall of the honeycomb structural forming bodies due to a friction between an extrusion die and the batch of ceramic raw materials. Moreover, in order to eliminate the drawbacks mentioned above, if an amount of binders and/or surface active agents is increased, there occurs drawbacks such that a crack is generated during a drying step and that it is necessary to widen a preheating zone for removing ashes during a firing step.

As for a method for eliminating the drawbacks mentioned above, Japanese Patent Laid-open Publication No. 2-81,606 (JA-A-2-81,606) discloses a method of using a fatty acid alkali soap as a surface active agent in the batch of ceramic raw materials for the cordierite ceramic honeycomb structural bodies. In this method, a fatty acid alkali soap is used for decreasing an extrusion pressure of the batch of ceramic raw materials so as to make ease a preferred orientation of the ceramic raw materials so that a thermal expansion coefficient of the cordierite ceramic honeycomb structural body is decreased.

However, even in the method disclosed in JP-A-2-81,606, there occurs drawbacks mentioned below. That is to say, if a dielectric drying generally used for the honeycomb structural body is applied to the batch including a fatty acid alkali soap as a surface active agent, a dielectric efficiency during a drying step is not good, and thus a drawback is liable to be generalted during the drying step. Moreover, since a compacting area is small in the honeycomb structural body having a thinner partition wall, a crack is liable to be generated due to the drawbacks during the drying step.

EP-A-353523 describes use of 1-20 parts of a sorbitan fatty acid ester of a polyoxyethylene sorbitan fatty acid ester ether, e.g. 5 parts of polyoxyethylene sorbitan lauryl ether are used per 100 parts of organic powder for extrusion molding, e.g. alumina powder.

### Summary of the Invention

An object of the present invention is to eliminate the drawbacks mentioned above and to provide a method of producing cordierite ceramic honeycomb structural bodies in which a crack generation during a drying step can be removed, a mass production can be performed and a thinner partition wall can be obtained.

According to the present invention, there is provided a method of producing cordierite ceramic honeycomb structural bodies as set out in claim 1.

In this method, . since a predetermined amount of non-ionic surface active agent having predetermined properties is added in the batch of ceramic raw materials for the cordierite ceramic honeycomb structural bodies, friction between an extrusion die and the batch of ceramic raw materials can be reduced, and also a crack generation during a drying step can be eliminated. Therefore, it is possible to obtain honeycomb structural bodies having a thinner partition wall in a mass production manner.

In the present invention, the non-ionic surface active agents are used for avoiding decrease of dielectric efficiency during the drying step. Moreover, if the surface active agents are an ionic system, ± polarizations occur, and thus the dielectric efficiency is decreased. Further, after various investigations with respect to the surface active agents, we find that an extrusion performance is varied by a value of HLB of the surface active agents defined by a ratio between a hydrophilic group and a hydrophobic group. That is to say, if use is made of the surface active agents having a larger HLB value i.e. a large amount of hydrophobic group, a water layer is formed between the extrusion die and the batch of ceramic raw materials, and thus a friction therebetween can be reduced. Moreover, if use is made of the surface active agents mentioned above, a variation of an extrusion rate becomes dull i.e. small with respect to a variation of an extrusion pressure, and thus a formation pattern becomes stable.

Moreover, if a value of HLB is not more than 10, an extrusion pressure becomes larger and a variation of an extrusion rate becomes sharp i.e. large with respect to a variation of the extrusion pressure. Therefore, it is necessary to use the surface active agents having an HLB value of more than 10. At present, since a maximum HLB value of the surface active agents of nonionic system is 20, an upper limit of the HLB value may be 20. This is assumed that the surface active agents having a larger amount of hydrophilic group and a smaller amount of hydrophobic group are effective in the batch of ceramic raw materials for cordierite honeycomb structural bodies.

Further, the reason for limiting an amount of the surface active agents to 0.1∼10 parts by weight as a solid component is as follows. That is to say, if an amount of the surface active agents is not more than 0.1 parts by weight, it is not possible to obtain a complete forming body since an effect of an addition of the surface active agents is not recognized. Moreover, if an amount of the surface active agents is not less than 10 parts by weight, a density difference of the surface active agents is liable to be generated during a drying step, and thus a crack is generated at a low density portion of the surface active agents. Further, as for the surface active agents to be used, if it is a nonionic system, all the known surface active agents can be used. The conditions mentioned above are preferred for extruding the honeycomb structural bodies having a thinner partition wall i.e. less than 170 µm, in which use is made of an extrusion die having a thin slit width of less than 170 µm and thus an extrusion pressure is large, but they are effective for all the extrusion dies having a slit width of not less than 170 µm.

### Description of the Preferred Embodiment

Cordierite ceramic honeycomb structural bodies, to which the method according to the invention is applied, can be obtained as follows. At first, raw materials such as talc, kaolin, alumina and raw materials for a cordierite generation are mixed to obtain a batch having SiO₂: 42∼56 wt%, preferably 47∼53 wt%, Al₂O₃: 30∼45 wt%, preferably 32∼38 wt%, MgO: 12∼16 wt%, preferably 12.5∼15 wt%, whose center composition is a theoretical chemical composition of cordierite (2MgO·2Al₂O₃·5SiO₂). The cordierite has been known as a ceramic having a low thermal expansion coefficient.

Then, binders and 0.1∼10 parts by weight of surface active agents of nonionic system having an HLB value of more than 10 are added to 100 parts by weight of the thus prepared batch. As for the nonionic surface active agents, use may be made of sucrose fatty acid ester, polyoxyethylene oleic acid ester, polyoxyethylene lauryl ether, polyoxyethylene oleyl ether, polyoxyethylenesorbitan monolaurate and so on. Then, the batch having an extrudable plasticity is extruded and dried up to obtain cordierite ceramic honeycomb structural bodies.

Hereinafter, actual embodiments will be explained.

### Embodiment 1

Raw materials having properties shown in Table 1 described below were mixed in a mixing ratio shown in Table 2 described below to obtain raw materials for cordierite generation. Then, 5 parts by weight of methyl cellulose was added to the raw materials for cordierite generation as a binder to obtain a raw material batch. After that, 1 part by weight of surface active agents shown in Table 3 described below was added to 100 parts by weight of the raw material batch, and they were mixed with a mixing water component to obtain a batch. The mixing operation was performed in such a manner that a resistant value, when a circular ball having a diameter of 2 mm intruded into this batch for a predetermined time duration, is 300±10 g.

Then, the thus prepared batch was extruded by using an extrusion die having a slit width of 150 µm and a cell density of 50 cell/cm² to obtain cordierite ceramic honeycomb structural bodies. After that, the thus obtained cordierite ceramic honeycomb structural bodies were dried up and then fired under a firing schedule of the highest temperature of 1400°C and a keep duration of 3 hours. Then, various properties were measured with respect to the cordierite ceramic honeycomb structural bodies. The results of this measurement were shown in Table 4 described below.

In the Table 4, a pseudo-plastic index is measured by passing the batch through a sample die made of a circular tube having a diameter of 5 mm and a length of 15 mm, measuring an extrusion pressure and an extrusion rate during the extruding operation, converting the measured values of the extrusion pressure and the extrusion rate into logarithm values, and calculating a slope of the extrusion rate with respect to the extrusion pressure by using a least square method. If this pseudo-plastic index is large, the extrusion rate is largely dependent upon the extrusion pressure, and thus the forming pattern becomes worse.

Moreover, a pressure, when the extrusion rate is 1 mm/sec, is calculated by using the slope mentioned above, and the calculated pressure value is regarded as a minimum extrusion pressure. Moreover, a pressure loss index is measured by passing the batch both through a sample die made of a circular tube having a diameter of 5 mm and a length of 15 mm and through a sample die made of a circular tube having a diameter of 5 mm and a length of 75 mm, measuring the extrusion rates by varying the extrusion pressure for both sample dies, calculating extrusion rate differences between two sample dies at various extrusion pressures, converting the values of the extrusion pressures and the extrusion rate differences into logarithm values, and calculating a slope between them by using a least square method. If this pressure loss index is large, a friction between the extrusion die and the batch becomes larger, and thus it is not preferred to form the honeycomb structural bodies.

**Table 1**

| Raw materials | Mean pore size (µm) | Chemical composition (%) | | | | | | |
|---|---|---|---|---|---|---|---|---|
| | | Ig-Loss | SiO₂ | Al₂O₃ | MgO | TiO₂ | Fe₂O₃ | CaO+Na₂+ K₂O |
| Talc | 7.0 | 5.6 | 61.3 | 0.9 | 30.9 | - | 0.9 | 0.3 |
| Kaolin | 0.4 | 13.9 | 45.5 | 38.6 | - | 0.8 | 0.4 | 0.2 |
| Calcined kaolin | 1.0 | 0.1 | 53.1 | 45.0 | - | 0.9 | 0.4 | 0.2 |
| Alumina | 4.0 | 0.2 | - | 99.2 | - | - | - | 0.3 |

**Table 2**

| Raw materials | Talc | Kaolin | Calcined kaolin | Alumina |
|---|---|---|---|---|
| Mixing ratio (%) | 41.0 | 25.0 | 20.5 | 13.5 |

**Table 3**

| Sample No. | Surface active agents | HLB |
|---|---|---|
| 1 | Diethylene glycol stearate | 3.8 |
| 2 | Sorbitan monostearate | 4.7 |
| 3 | Polyoxyethylenesorbitan monolaurate | 16.7 |
| 4 | Sucrose fatty acid ester | 8.0 |
| 5 | Sucrose fatty acid ester | 11.0 |
| 6 | Sucrose fatty acid ester | 13.0 |
| 7 | Polyoxyethylene oleic acid ester | 9.0 |
| 8 | Polyoxyethylene oleic acid ester | 14.0 |
| 9 | Polyoxyethylene distearic acid ester | 20.0 |
| 10 | Polyoxyethylene lauryl ether | 10.0 |
| 11 | Polyoxyethylene lauryl ether | 14.0 |
| 12 | Polyoxyethylene lauryl ether | 20.0 |
| 13 | Polyoxyethylene oleyl ether | 8.0 |
| 14 | Polyoxyethylene oleyl ether | 14.0 |

**Table 4**

| Sample No. | Pseudo-plastic index | Pressure loss index | Minimum extrusion pressure (kg/cm²) | Thermal expansion coefficient (×10⁻⁶/°C (40∼800°C)) | Porosity (%) |
|---|---|---|---|---|---|
| 1 | 8.5 | 0.12 | 4.6 | 0.45 | 30.0 |
| 2 | 8.0 | 0.11 | 4.5 | 0.44 | 30.1 |
| 3 | 4.0 | 0.04 | 3.2 | 0.33 | 31.0 |
| 4 | 7.2 | 0.10 | 4.3 | 0.43 | 30.3 |
| 5 | 5.1 | 0.07 | 3.6 | 0.36 | 30.8 |
| 6 | 4.6 | 0.06 | 3.4 | 0.33 | 31.2 |
| 7 | 6.6 | 0.10 | 3.9 | 0.40 | 30.5 |
| 8 | 4.1 | 0.05 | 3.3 | 0.34 | 31.3 |
| 9 | 3.8 | 0.03 | 2.9 | 0.30 | 31.6 |
| 10 | 5.7 | 0.08 | 3.6 | 0.38 | 30.6 |
| 11 | 4.4 | 0.06 | 3.4 | 0.33 | 31.2 |
| 12 | 4.2 | 0.03 | 3.0 | 0.31 | 31.5 |
| 13 | 7.8 | 0.11 | 4.2 | 0.44 | 30.3 |
| 14 | 3.6 | 0.04 | 3.4 | 0.35 | 31.2 |

From the results shown in the Table 4, if use is made of the surface active agents having an HLB value of more than 10, both of the pseudo-plastic index and the pressure loss index are lowered with no dependency upon kinds of the surface active agents. That is to say, a variation of the extrusion rates is small with respect to a variation of the extrusion pressure, and thus a friction between the extrusion die and the batch is also small. Therefore, the minimum extrusion pressure is also lowered, and thus the batch including the surface active agents mentioned above is preferred to extrude the honeycomb structural bodies having a thinner partition wall in which the extrusion pressure is large. These results mentioned above can be obtained even in the same surface active agents, and thus it is confirmed that the batch including the surface active agents having an HLB value of more than 10 show an excellent extrusion performance.

Moreover, if use is made of the surface active agents having an HLB value of more than 10, the thermal expansion coefficients are lowered, the porosities are increased, and thus a heat shock resistivity and a catalyst carrying performance is improved. These results are assumed that a flowability of the batch is improve, and thus kaolin raw materials in the raw material batch for cordierite generation show a preferred orientation. Moreover, it is assumed that an increase of the porosity is generated by separating a distance between particles in the raw materials due to an addition of the surface active agents.

### Embodiment 2

By using the batch including surface active agents shown in Table 5 at a mixing rate of Table 5, the same mixing, extruding and measuring operations as is the same as those shown in the embodiment 1 were performed. The results were shown in the Table 5. In the Table 5, a crack generation rate during a drying step was measured by counting the number of cracks after performing a dielectric drying with naked eyes and calculating an average of the results of 50 sample pieces.

**Table 5**

| Sample No. | Surface active agents | HLB | Added amount (%) | Pseudo-plastic index | Pressure loss index | Minimum extrusion pressure (kg/cm²) | Crack generation during drying (%) |
|---|---|---|---|---|---|---|---|
| 15 | Diethylene glycol stearate | - | - | 9.0 | 0.14 | 5.3 | 40.0 |
| 16 | Diethylene glycol stearate | 3.8 | 0.1 | 8.8 | 0.13 | 5.1 | 20.0 |
| 17 | Diethylene glycol stearate | 3.8 | 5.0 | 8.6 | 0.11 | 4.4 | 2.0 |
| 18 | Diethylene glycol stearate | 3.8 | 10.0 | 8.2 | 0.11 | 4.2 | 4.0 |
| 19 | Diethylene glycol stearate | 3.8 | 15.0 | 7.9 | 0.10 | 4.1 | 40.0 |
| 20 | Polyoxyethylene lauryl ether | 10.0 | 0.05 | 7.9 | 0.11 | 4.8 | 20.0 |
| 21 | Polyoxyethylene lauryl ether | 10.0 | 0.1 | 6.3 | 0.09 | 4.2 | 0.0 |
| 22 | Polyoxyethylene lauryl ether | 10.0 | 5.0 | 5.4 | 0.07 | 3.4 | 4.0 |
| 23 | Polyoxyethylene lauryl ether | 10.0 | 10.0 | 4.9 | 0.07 | 3.3 | 8.0 |
| 24 | Polyoxyethylene lauryl ether | 10.0 | 15.0 | 4.3 | 0.07 | 3.1 | 80.0 |
| 25 | Polyoxyethylene lauryl ether | 20.0 | 0.05 | 7.3 | 0.08 | 4.4 | 14.0 |
| 26 | Polyoxyethylene lauryl ether | 20.0 | 0.1 | 5.0 | 0.04 | 3.6 | 0.0 |
| 27 | Polyoxyethylene lauryl ether | 20.0 | 5.0 | 3.6 | 0.02 | 2.7 | 8.0 |
| 28 | Polyoxyethylene lauryl ether | 20.0 | 10.0 | 3.1 | 0.02 | 2.4 | 12.0 |
| 29 | Polyoxyethylene lauryl ether | 20.0 | 15.0 | 2.6 | 0.01 | 2.2 | 90.0 |

From the results shown in the Table 5, if an amount of the surface active agents is gradually increased, both of the pseudo-plastic index and the pressure loss index are lowered. However, if an amount of the surface active agents is not less than 10 parts by weight, a crack is generated during the drying step, and thus a complete extrusion body cannot be obtained. On the other hand, if an amount of the surface active agents is not more than 0.1 parts by weight, an effect of the addition of the surface active agents does not appear. Moreover, if use is made of the surface active agents having a low HLB value, the pseudo-plastic index and the pressure loss index are lowered with an increase of an amount of the surface active agents, but these effects are very small. Further, in the case of using the surface active agents having a low HLB value, if an amount of the surface active agents to be used is increased, a crack is liable to be generated during the drying step.

As can be clearly understood from the above, according to the invention, since a predetermined amount of the nonionic surface active agent having predetermining properties is added in the batch for extrusion, a friction between the extrusion die and the batch can be reduced, and also a crack generation during the drying step can be eliminated. Therefore, it is possible to obtain the cordierite ceramic honeycomb structural bodies having a thinner partition wall in a mass production manner.

## Claims

1. A method of producing a corderite ceramic honeycomb structural body, including the steps of preparing a batch of ceramic raw materials for the ceramic structural body, extruding the batch to obtain the structural body, and drying and firing the structural body, comprising a batch preparing step in which 0.1∼10 parts by weight of one or more non-ionic surface active agents are added to 100 parts by weight of said batch of ceramic raw materials, said non-ionic surface active agent or agents having a hydrophile-lypophile balance (HLB) of more than 10, which is defined by a weight ratio between a hydrophilic group and a hydrophobic group.

2. The method according to claim 1, wherein use is made of 0.3∼3 parts by weight of said non-ionic surface active agent.

3. The method according to claim 1 or 2, wherein said non-ionic surface active agent has an HLB value of more than 15.

4. The method according to claim 1 or 2, wherein said non-ionic surface active agent is sucrose fatty acid ester, polyoxyethylene oleic acid ester, polyoxyethylene lauryl ether, polyoxyethylene oleyl ether or polyoxyethylene sorbitan monolaurate.

5. The method according to any one of claims 1 to 4, wherein said extruding step is performed by using an extrusion die having a slit width of less than 170 µm.

## Patentansprüche

1. Verfahren zur Herstellung eines Cordierit-Keramikwaben-Strukturkörpers, umfassend die Schritte des Herstellens einer Masse aus Keramik-Rohmaterialien für den Keramikstrukturkörper, des Strangpressens der Masse, um den Strukturkörper zu erhalten, und des Trocknens und Brennens des Strukturkörpers, umfassend einen Masse-Herstellungsschritt, bei dem 0,1 - 10 Gewichtsteile eines oder mehrerer nichtionogener oberflächenaktiver Mittel zu 100 Gewichtsteilen der Masse aus Keramikrohmaterialien zugegeben werden, wobei das oder die oberflächenaktive Mittel einen Hydrophil-Lipophil(HLB-)Wert, definiert durch das Gewichtsverhältnis zwischen hydrophilen Gruppen und hydrophoben Gruppen, von mehr als 10 aufweist bzw. aufweisen.

2. Verfahren nach Anspruch 1, worin 0,3 - 3 Gewichtsteile des nichtionogenen oberflächenaktiven Mittels eingesetzt werden.

3. Verfahren nach Anspruch 1 oder 2, worin das nichtionogene oberflächenaktive Mittel einen HLB-Wert von mehr als 15 aufweist.

4. Verfahren nach Anspruch 1 oder 2, worin das nichtionogene oberflächenaktive Mittel Saccharosefettsäureester, Polyoxyethylenölsäureester, Polyoxyethylenlaurylether, Polyoxyethylenoleylether oder Polyoxyethylensorbitanmonolaurat ist.

5. Verfahren nach einem der Ansprüche 1 bis 4, worin der Strangpreßschritt unter Verwendung einer Extrusionsdüse mit einer Schlitzbreite von weniger als 170 µm durchgeführt wird.

## Revendications

1. Procédé de production d'un corps céramique de cordiérite à structure en nid d'abeilles, incluant les étapes de préparation d'un lot de matières céramiques brutes pour le corps céramique structural, d'extrusion du lot pour obtenir le corps structural et de séchage et de cuisson du corps structural, comprenant une étape de préparation du lot dans laquelle 0,1∼10 parties en poids d'un ou plusieurs agents tensioactifs non ioniques sont ajoutés à 100 parties en poids dudit lot de matières céramiques brutes, lesdits agents tensioactifs non ioniques ou agents ayant une balance hydrophile-lipophile (HLB) de plus de 10, qui est définie par un rapport en poids entre un groupement hydrophile et un groupement hydrophobe.

2. Procédé selon la revendication 1, dans lequel on utilise 0,3∼3 parties en poids dudit agent tensioactif non ionique.

3. Procédé selon la revendication 1 ou 2, dans lequel ledit agent tensioactif non ionique a une valeur HLB de plus de 15.

4. Procédé selon la revendication 1 ou 2, dans lequel ledit agent tensioactif non ionique est un ester d'acide gras de sucrose, un ester d'acide oléique de polyoxyéthylène, un éther laurylique de polyoxyéthylène, un éther oléylique de polyoxyéthylène ou du monolaurate de polyoxyéthylènesorbitan.

5. Procédé selon l'une quelconque des revendications 1 à 4 dans lequel ladite étape d'extrusion est effectuée en utilisant une filière d'extrusion ayant une largeur de fente de moins de 170 µm.
